# EUROPEAN PATENT SPECIFICATION

(11) **EP 1 888 410 B1**
(45) Date of publication and mention of the grant of the patent: **16.09.2009**
(21) Application number: 06727546.1
(22) Date of filing: 19.04.2006
(51) Int. Cl.: B65B 11/34, B65B 61/18, B65B 25/00, B29C 65/74

(54) **WRAPPING DEVICE FOR ARTICLES AND WRAPPING METHOD**
VERPACKUNGSVORRICHTUNG FÜR ARTIKEL UND VERPACKUNGSVERFAHREN
DISPOSITIF D'EMBALLAGE POUR ARTICLES ET PROCEDE D'EMBALLAGE

(30) Priority: 21.04.2005 IT BO20050272
(43) Date of publication of application: 20.02.2008
(73) Proprietor: SACMI Packaging S.p.A., 40026 Imola (BO) (IT)
(72) Inventor: FRABETTI, Fabio, 40123 Bologna (IT); BARALDI, Luca, 40133 Bologna (IT); GIOVANNINI, Flavio, 40067 Rastignano (IT)
(74) Representative: Negrini, Elena
(86) International application number: PCT/IB2006/001043
(87) International publication number: WO 2006/111850

(56) References cited:
- EP-A- 0 816 229
- WO-A-03/106267
- US-A- 4 994 137
- US-A- 5 935 686

## Description

### TECHNICAL FIELD

The present invention refers to the field of packaging and it relates to a wrapping device for small articles, particularly for chocolates, bonbon, candy and the like and it relates to a method for wrap said articles.

### BACKGROUND ART

There are known devices for packing small articles, such as chocolates, sealing them in a sheet of material whose edges are hot or cold welded in order to obtain at least a partial airtight sealing.

A drawback of said devices consists in that the wrapping is very difficult to be opened; especially the children are not able to break the sheet of the wrapping.

Some of the known devices carry out transversal edges of the wrappings shaped in a zigzag manner or they carry out one or more opening score on the longitudinal edge of the wrapping.

A drawback of said known devices consists in that often the opening of the wrapping is not sufficiently easy.

Other drawback consists in that the zigzag shape of the edges characterizes in an undesirable manner the product and it limits the possible form and realization of the wrapping.

Some of the known devices made the final closure of the wrapping by making candy wrapper twist in portions of the wrapping material predisposed for the cold gluing. sealed wrapping allowing the passage of fluids through the interstices caused by the twists. A drawback of the known wrapping methods to facilitate the opening of the wrapping envelope that can be carried out by means of said know devices, consist in that they can slow down the productivity of the devices.
Document EP 0 816 229 discloses a device for wrapping an article comprising a holding mean for the article partially rolled-up by a wrapping foil and at least two matching means, reciprocally moving between a maximum mutual distanced, to interpose between them the longitudinal flaps of said wrapping foil protruding from the article, and a mutual matching condition to fold up and to join said longitudinal flaps. The device further comprises a cutting mean provided to carry out, in one or both the longitudinal flaps of the wrapping foil, a cut fit to facilitate the opening of the wrapper by an user

### DISCLOSURE OF THE INVENTION

An object of the present invention is to propose a device and a method to wrap articles, which can carry out opening score in simple and reliable manner to facilitate the opening of the wrapping to the users.

Other object is to propose a device and a method to carry out an airtight candy twist wrapping.

Further object is to propose a fast and simple wrapping method.

### BRIEF DESCRIPTION OF THE DRAWINGS

The characteristics of the invention are highlighted in the following with particular reference to the enclosed drawings, in which:
- Figure 1 shows a schematic front and partial view of the device, object of the present invention, for wrapping articles, in a condition of making cuts on the edges of a material for the wrapping of an article;
- Figure 2 shows a partial and enlarged view of a detail of the device of Figure 1 in a condition of grasping the article and of the respective wrapping material, immediately precedent to the condition of the Figure 1;
- Figure 3 shows a side view of bending means of the device of Figure 1 with rotating pliers means and with articles to be wrapped in various wrapping conditions, in which some parts are removed to better evidence others,
- Figure 4 shows a front and enlarged view of a variant of a first matching mean of the device of the invention.

### BEST MODE OF CARRYING OUT THE INVENTION

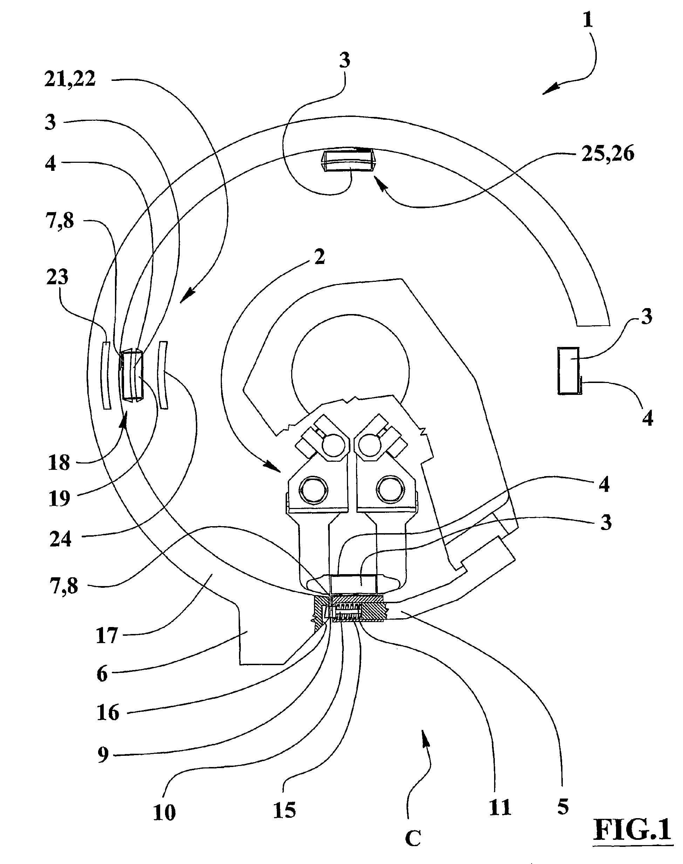

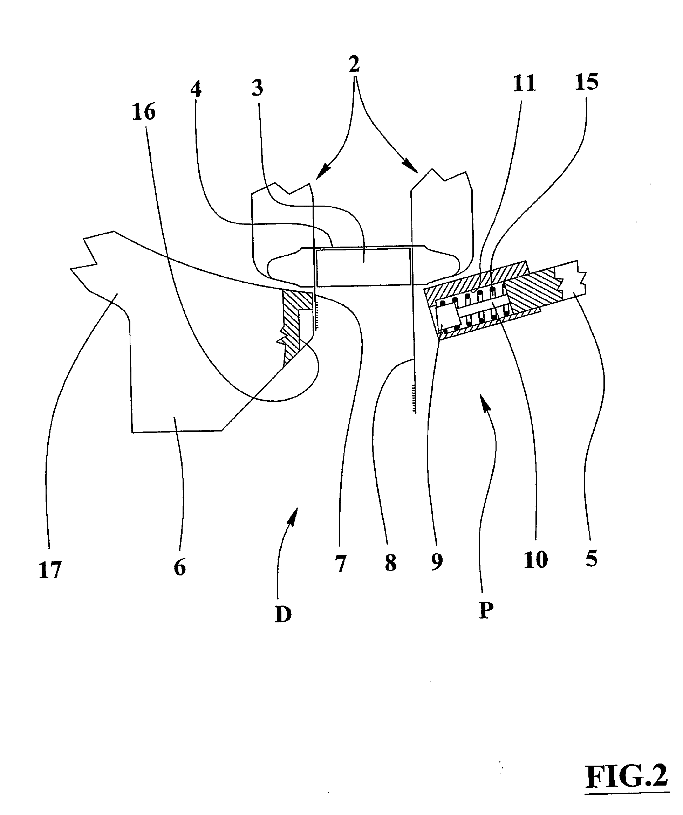

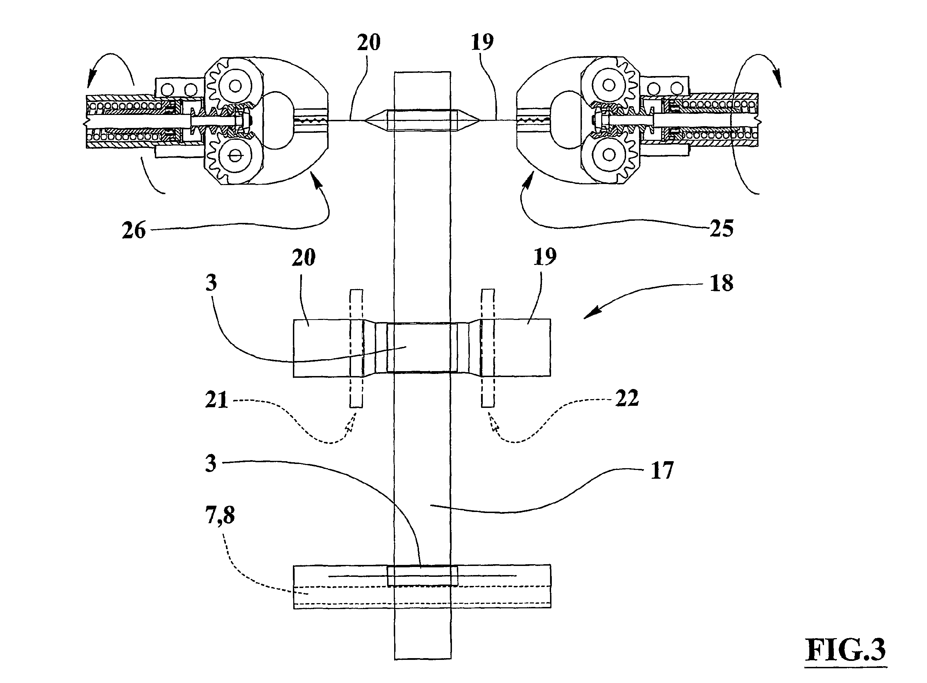

With reference to the figures 1 - 3, numeral 1 indicates the device of the present invention for wrapping an article, such as chocolates, candies, bonbon, praline or other articles, also non alimentary articles, for example having approximately to parallelepiped, pubic, prismatic forms and the like, also irregular forms.

The device 1 is preferably of rotating motion type, or with wrapper performed during a circular trajectory of the articles, and it comprises a holding mean 2, for example a rotating pliers with horizontal rotation axis having two jaws with the contacting portions oriented almost vertical in the holding phase of the article 3 partially enveloped by a wrapping foil material 4.

Particularly the material 4 is grasped in a manner to be shaped in form of a kind of "C" to contact three adjacent faces to the article 3 and with longitudinal flaps 7, 8, protruding quite a lot from said article 3, almost vertical disposed and mutually parallel.

The device 1 is also provided with two matching means, first 5 and second 6, reciprocally moving from a maximum distanced condition D, for allowing the interposition between them of the longitudinal flaps 7, 8 protruding from the article 3, to a mutual matching condition C to fold up and to join together said longitudinal flaps 7, 8.

The device 1 further comprises a cutting mean 9 sticking out, at least in the mutual matching condition C, from the first matching mean 5 in the direction of the second matching mean 6 to execute, in one or preferably in both the longitudinal flaps 7, 8, a cut to facilitate the user in opening the wrapping.

The invention provides that the cutting mean 9 comprise a straight blade or a shaped blade for example of "V" shape.

The device 1 includes guiding means 10, consisting, for example, of a small sliding shaft in a seat obtained in the first matching mean 5, to allow the sliding of the cutting mean 9 between a protruding condition P from the first matching mean 5 and an inner condition I in which the cutting mean is contained in a recess 11 of the first matching mean 5.

The device 1 is provided with first elastic means 15 acting on the cutting mean 9 with an elastic force in the direction of the second matching mean.

The device 1 comprises a movable beat mean 12 fixed to the first matching mean 5 in sliding manner toward the second matching mean 6 between an extended condition E, in which contains completely the cutting mean 9, and a re-entering condition R, in which the cutting mean 9 come out from the movable beat mean 12 through an opening 13 of this latter. The device 1 comprises second elastic means 14 acting on the movable beat mean 12 with an elastic force in the direction of the second matching mean.

The second matching mean 6 has a recess 16 fit to house a portion of the cutting mean 9 at least in the mutual matching condition C between the matching means 5, 6.

The invention provides that, when the wrapping foil material 4 with longitudinal flaps 7, 8 have cold adhesive thereon, the matching means are of the type for cold gluing, while when the wrapping foil material 4 is of thermo welding type, the matching means are of heated type for hot welding.

The second matching mean 6 is fixed and it has annular sector shaped bending means 17 for keeping folded the two longitudinal flaps 7, 8 during the circular trajectory followed by the article during the wrapper.

The bending means 17 extends, in the rotating motion direction, at least up to a closure mean 18 for the transversal flaps 19, 20 of the material 4 protruding from the article 3, preferably up to the area in which the holding mean 2 release the wrapped article.

The closure mean 18 comprises two pliers 21, 22, for the closure of the transversal flaps 19, 20 of the material 4 vertically protruding out from the article 3, each provided with two jaws 23, 24 positioned on a plane nearly parallel to that defined by the rotary motion and nearly tangent to, or positioned on, circumferences centred on the rotation axis.

When the transversal flaps 19, 20 of the wrapping foil material 4 are provided with adhesive, the jaws 23, 24 of the pliers 21, 22 are of cold gluing type and when the wrapping foil material 4 is of thermo welding type, said jaws 23, 24 of the pliers 21, 22 are of heated type for hot welding.

The device comprises two rotating pincer means 25, 26 for holding and rotating the transversal flaps 19, 20 of the material 4 to carry out the candy wrapper twist.

The rotating pincer means 25, 26 are set downstream of the closure mean 18 in respect to the rotating motion direction.

The matching means 5, 6 are angularly spaced in respect to the closure mean 18 of about 90° and this last latter is angularly spaced in respect to the rotating pincer means 25, 26 of around 90°.

The rotation axes of the rotating pincer means 25, 26 are nearly perpendicular to the plane defined by the rotation motion.

The operation of the device according to the invention method to wrap an article provides:
- to grasp by means of a holding mean 2 the article 3 partially rolled up in a wrapping foil material 4 with the two longitudinal flaps 7, 8 thereof protruding from the article 3;
- to interpose the two protruding longitudinal flaps 7, 8 between two matching means first 5 and second 6 mutually moving and in a maximum mutual distanced condition D;
- to move reciprocally the two matching means first 5 and second 6 until to bring them in a mutual matching condition C to fold up and to joint said longitudinal flaps 7, 8;
- to make, almost contemporaneously to the folding of the flaps, at least a linear or V shaped cut, for facilitating the opening, in one or both said longitudinal flaps 7, 8 by means of a cutting mean 9 correspondingly shaped and protruding from the first matching mean 5 at least in the mutual matching condition C.

Furthermore the method provides to fix, by means of closure means 18, the transversal flaps 19, 20 of the material 4, sealing them perfectly, subsequently to the realization of the cut and to rotate the transversal flaps 19, 20 by means of rotating pincer means 25, 26 to subsequently realize knots after the fixing of the transversal flaps.

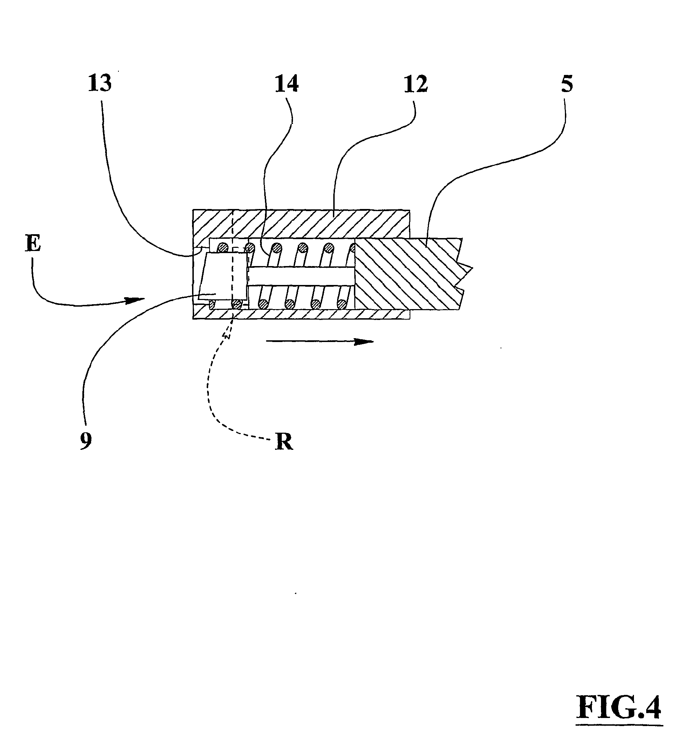

In the variant of figure 4, the device 1 comprises a movable beat mean 12 fixed to the first matching mean 5 in a manner sliding toward the second matching mean 6 between an extended condition E, in which contains completely the cutting mean 9, and a re-entering condition R, in which the cutting mean 9 comes out from the movable beat mean 12 through an opening 13 of this latter, and to comprise second elastic means 14 acting on the movable beat mean 12 with an elastic force in the direction of the second matching mean.

The invention provides that the cutting mean 9 is rigidly fixed to the first matching mean 5 or, in alternative, that it is provided with the same or similar sliding means and with first elastic means described in the embodiment previously mentioned. In this case, the invention provides that the first elastic means 15 acts a force bigger than the force of the second elastic means 14.

The adoption of the movable beat mean 12 avoid the contact of the cutting mean with the longitudinal flaps during the folding of these latter and it is preferable when it is necessary to avoid the risk to damage the wrapping of the article 3.

An advantage of the present invention is to provide a device and a method to wrap articles, which can carried out in simple and reliable manner cuts for opening score fit to facilitate the wrapper opening by an user.

Other advantage is to provide a device and a method for carrying out an airtight candy wrapping twist.

### Further advantage is to provide a fast and simple wrapping method

Other advantage is to provide a method for carrying out a wrapping, which can allow the consumer to open the wrapper and consume the contents therein without touching said content by the hands.

## Claims

1. Device for wrapping an article comprising a holding mean (2) for the article (3) partially rolled-up by a wrapping foil material (4) and at least two matching means, first (5) and second (6), reciprocally moving between a maximum mutual distanced condition (D), to interpose between them the longitudinal flaps (7, 8) of said material (4) protruding from the article (3), and a mutual matching condition (C) to fold up and to join said longitudinal flaps (7, 8), the device further comprises at least a cutting mean (9) to carry out in one or both the longitudinal flaps (7, 8) of the wrapping foil a cut fit to facilitate the opening of the wrapper by an user; said device being **characterized in that** the cutting mean (9) protrudes, at least in the mutual matching condition (C), from the first matching mean (5) in the direction of the second matching mean (6)

2. Device according to claim 1 **characterized in that** it comprises guiding means (10) allowing the cutting mean (9) sliding between a protruding condition (P), in which it juts out of the first matching mean (5), and an inner condition (1) in which the cutting mean is housed in a recess (11) of the first matching mean (5) and **in that** it comprises first elastic means (15) acting on the cutting mean (9) with an elastic force in the direction of the second matching mean.

3. Device according to claim 1 **characterized in that** it comprises a movable beat mean (12) fixed to the first matching mean (5) in a manner sliding toward the second matching mean (6) between an extended condition (E), in which contains completely the cutting mean (9), and a re-entering condition (R), in which the cutting mean (9) comes out from the movable beat mean (12) through an opening (13) of this latter, and **in that** it comprises second elastic means (14) acting on the movable beat mean (12) an elastic force in the direction of the second matching mean.

4. Device according to claim 3 **characterized in that** the cutting mean (9) is rigidly fixed on the first matching mean 5.

5. Device according to claims 2 and 3 **characterized in that** the first elastic means (15) acts a force bigger then that of the second elastic means (14).

6. Device according to claim 1 **characterized in that** the second matching mean (6) has a recess (16) fit to house a portion of the cutting mean (9) at least in the mutual matching condition (C) between the matching means (5, 6).

7. Device according to claim 1 **characterized in that** when the wrapping foil material (4) has longitudinal flaps (7, 8) provided with adhesive, the matching means are cold gluing type.

8. Device according to claim 1 **characterized in that** when the wrapping foil material (4) is of thermo welding type, the matching means are of hot welding type.

9. Device according to claim 1 **characterized in that** it is of rotating motion type.

10. Device according to claim 9 **characterized in that** the second matching mean (6) is fixed and comprises ring segment shaped bending means (17).

11. Device according to claim 10 **characterized in that** the bending means (17) extends in the rotating motion direction at least until a closure mean (18) for the transversal flaps (19, 20) of the material (4), protruding from the article (3).

12. Device according to claim 11 **characterized in that** the closure mean (18) comprises two pliers (21, 22) for the closure of the transversal flaps (19, 20) of the material (4) protruding from the article (3), each pliers being provided with of two jaws (23, 24).

13. Device according to claim 12 **characterized in that** the jaws (23, 24) of each pliers (21, 22) are disposed on a plane nearly parallel to that defined by the rotary motion and they are nearly tangent to, or disposed on, circumferences centred on the motion rotation axis.

14. Device according to claim 12 **characterized in that** when the wrapping foil material (4) is provided with adhesive transversal flaps (19, 20), the jaws (23, 24) of the pliers (21, 22) are of cold gluing type.

15. Device according to claim 12 **characterized in that** when the wrapping foil material (4) is thermo welding type, the jaws (23, 24) of the pliers (21, 22) are of hot welding type.

16. Device according to claim 1 **characterized in that** it comprises two rotating pincer means (25, 26) for holding the transversal flaps (19, 20) of the material (4) and for rotating said flaps to carry out candy wrapping twist.

17. Device according to claims 11 and 16 **characterized in that** the rotating pincer means (25, 26) are positioned downstream to the closure mean (18) in respect to the direction of the rotating motion.

18. Device according to claim 17 **characterized in that** the matching means (5, 6) are angularly spaced apart from the closure mean (18) of around 90° and this latter is angularly spaced apart from the rotating pincer means (25, 26) of around 90°.

19. Device according to claim 16 **characterized in that** the rotating pincer means (25, 26) are nearly perpendicular to the plane defined by the rotating motion.

20. Device according to claim 1 **characterized in that** the article (3) consists of a chocolate, in a bonbon, a candy, a praline or the like.

21. Method for wrapping an article by means of the device of any one of the preceding claims **characterized in that** it provides:
- to grasp by means of a holding mean (2) the article (3) partially rolled up in a wrapping foil material (4) with the two longitudinal flaps (7, 8) protruding from the article (3);
- to interpose the two protruding longitudinal flaps (7, 8) between two matching means, first 5 and second 6, reciprocally moving and in a maximum mutual distanced condition D;
- to move mutually the two matching means, first (5) and second (6), until to bring them in a mutual matching condition (C) to fold up and to join said longitudinal flaps (7, 8);
- to carry out, almost contemporaneously to the folding the flaps, at least a cut for facilitating the opening in one or both said longitudinal flaps (7, 8) by means of a cutting mean (9) protruding from the first matching mean (5) at least in the mutual matching condition (C).

22. Method according to claim 21 **characterized in that** it comprises to carry out a linear or a "V" shaped cut by means of the cutting mean correspondingly shaped.

23. Method according to claim 21 **characterized in that** it comprises to fix the transversal flaps (19, 20) of the material (4) by means of closure means (18), sealing perfectly them, after the realization of the cut.

24. Method according to claim 23 **characterized in that** it comprises to rotate the transversal flaps (19, 20) by means of the rotating pincer means (25, 26) to carry out wrapping twist after the fixing of the transversal flaps.

## Patentansprüche

1. Vorrichtung zum Verpacken eines Artikels, umfassend ein Haltemittel (2) für den Artikel (3), der teilweise in ein Verpackungsfolienmaterial (4) eingerollt ist, sowie mindestens zwei passende Mittel, ein erstes (5) und ein zweites (6), die sich wechselseitig zwischen einem gegenseitig maximal beabstandeten Zustand (D), um zwischen ihnen die Längsumschlagklappen (7, 8) des Materials (4) einzufügen, die sich von dem Artikel (3) ersterecken, und einem gegenseitig zueinander passenden Zustand (C) bewegen, um die Längsumschlagklappen (7, 8) zu falten und zu verbinden, während die Vorrichtung weiterhin mindestens ein Schneidmittel (9) umfasst, um in einer oder beiden Längsumschlagklappen (7, 8) der Verpackungsfolie einen Schnitt auszuführen, der angepasst ist, um die Öffnung der Verpackung durch einen Benutzer zu erleichtern, die Vorrichtung ist **dadurch gekennzeichnet, dass** das Schneidmittel (9) mindestens in dem gegenseitig zueinander passenden Zustand (C) von dem ersten passenden Mittel (5) in der Richtung des zweiten passenden Mittels (6) vorsteht.

2. Vorrichtung gemäß Anspruch 1, **dadurch gekennzeichnet, dass** sie Führungsmittel (10) umfasst, die dem Schneidmittel (9) das Gleiten zwischen einem hervorstehendem Zustand (P), in dem es aus dem ersten passenden Mittel (5) vorsteht, und einem inneren Zustand (I) gestatten, in dem das Schneidmittel in einer Aussparung (11) des ersten passenden Mittels (5) aufgenommen ist und **dadurch**, dass sie erste elastische Mittel (15) umfasst, die auf das Schneidmittel (9) mit einer elastischen Kraft in Richtung des zweiten passenden Mittels wirken.

3. Vorrichtung gemäß Anspruch 1, **dadurch gekennzeichnet, dass** sie ein bewegbares Schlagmittel (12) umfasst, das an dem ersten passenden Mittel (5) in einer Weise befestigt ist, dass es in Richtung des zweiten passenden Mittels (6) zwischen einem ausgefahrenen Zustand (E), in dem es das Schneidmittel (9) vollständig enthält, und einem Wiedereintrittszustand (R) gleitet, in dem das Schneidmittel (9) aus dem bewegbaren Schlagmittel (12) durch eine Öffnung (13) des letzteren hervorkommt und **dadurch**, dass sie zweite elastische Mittel (14) umfasst, die auf das bewegbare Schlagmittel (12) mit einer elastischen Kraft in Richtung des zweiten passenden Mittels wirken.

4. Vorrichtung gemäß Anspruch 3, **dadurch gekennzeichnet, dass** das Schneidmittel (9) fest an dem ersten passenden Mittel (5) befestigt ist.

5. Vorrichtung gemäß den Ansprüchen 2 und 3, **dadurch gekennzeichnet**, das die ersten elastischen Mittel (15) eine größere Kraft als die zweiten elastischen Mittel (14) aufbringen.

6. Vorrichtung gemäß Anspruch 1, **dadurch gekennzeichnet, dass** das zweite passende Mittel (6) eine Aussparung (16) aufweist, die angepasst ist, um einen Bereich des Schneidmittels (9) mindestens in dem gegenseitig zueinander passenden Zustand (C) zwischen den passenden Mitteln (5, 6) aufzunehmen.

7. Vorrichtung gemäß Anspruch 1, **dadurch gekennzeichnet, dass** die passenden Mittel vom Kaltklebetyp sind, wenn das Verpackungsfolienmaterial (4) Längsumschlagklappen (7, 8) aufweist, die mit Klebstoff ausgestattet sind.

8. Vorrichtung gemäß Anspruch 1, **dadurch gekennzeichnet, dass** die passenden Mittel vom Warmschweißtyp sind, wenn das Verpackungsfolienmaterial (4) vom Thermoschweißtyp ist.

9. Vorrichtung gemäß Anspruch 1, **dadurch gekennzeichnet, dass** sie vom Drehbewegungstyp ist.

10. Vorrichtung gemäß Anspruch 9, **dadurch gekennzeichnet, dass** das zweite passende Mittel (6) befestigt ist und ringsegmentförmige Biegemittel (17) umfasst.

11. Vorrichtung gemäß Anspruch 10, **dadurch gekennzeichnet, dass** die Biegemittel (17) sich in der Drehbewegungsrichtung mindestens bis zu einem Verschlussmittel (18) für die Querumschlagklappen (19, 20) des Materials (4) erstrecken, das von dem Artikel (3) vorsteht.

12. Vorrichtung gemäß Anspruch 11, **dadurch gekennzeichnet, dass** das Verschlussmittel (18) zwei Zangen (21, 22) für das Verschließen der Querumschlagklappen (19, 20) des Materials (4) umfasst, das von dem Artikel (3) vorsteht, wobei jede Zange mit zwei Klauen (23, 24) ausgestattet ist.

13. Vorrichtung gemäß Anspruch 12, **dadurch gekennzeichnet, dass** die Klauen (23, 24) jeder Zange (21, 22) in einer Ebene angeordnet sind, die nahezu parallel zu der durch die Drehbewebung definierten ist und dass sie nahezu tangential zu oder auf Umfangslinien angeordnet sind, die um die Drehbewegungsachse zentriert sind.

14. Vorrichtung gemäß Anspruch 12, **dadurch gekennzeichnet, dass** die Klauen (23, 24) der Zangen (21, 22) vom Kalteklebetyp sind, wenn das Verpackungsfolienmaterial (4) mit klebenden Querumschlagldappen (19, 20) bereitgestellt ist.

15. Vorrichtung gemäß Anspruch 12, **dadurch gekennzeichnet, dass** die Klauen (23, 24) der Zangen (21, 22) vom Warmschweißtyp sind, wenn das Verpackungsfolienmaterial (4) vom Thermoschweißtyp ist.

16. Vorrichtung gemäß Anspruch 1, **dadurch gekennzeichnet, dass** sie zwei drehende Zangenmittel (25, 26) zum Halten der Querumschlagklappen (19, 20) des Materials (4) und zum Drehen der Umschlagklappen umfasst, um eine Süßigkeiten verpackende Drehbewegung auszuführen.

17. Vorrichtung gemäß den Ansprüchen 11 und 16, **dadurch gekennzeichnet, dass** die Drehzangenmittel (25, 26) stromabwärts des Verschlussmittels (18) in Bezug auf die Richtung der Drehbewegung angeordnet sind.

18. Vorrichtung gemäß Anspruch 17, **dadurch gekennzeichnet, dass** die passenden Mittel (5, 6) winklig von dem Verschlussmittel (18) mit ungefähr 90° beabstandet sind und das Letztere ist winklig von den Drehzangenmitteln (25, 26) mit ungefähr 90° beabstandet.

19. Vorrichtung gemäß Anspruch 16, **dadurch gekennzeichnet, dass** die Drehzangenmittel (25, 26) nahezu rechtwinklig zu der durch die Drehbewegung definierten Ebene sind.

20. Vorrichtung gemäß Anspruch 1, **dadurch gekennzeichnet, dass** der Artikel (3) aus einer Schokolade, einem Bonbon, einer Süßigkeit, einer Praline oder Ähnlichem besteht.

21. Verfahren zum Verpacken eines Artikels mittels der Vorrichtung gemäß einem der vorhergehenden Ansprüche, **dadurch gekennzeichnet, dass** es bereitstellt:
Greifen des Artikels (3), der teilweise in einem Verpackungsfolienmaterial (4) eingerollt ist, mittels eines Haltemittels (2) an den zwei Längsumschlagklappen (7, 8), die sich von dem Artikel (3) erstrecken,
Einfügen der zwei hervorstehenden Längsumschlagklappen (7, 8) zwischen zwei passende Mittel, einem ersten (5) und einem zweiten (6), die sich wechselseitig bewegen und in einem gegenseitig maximal beabstandeten Zustand (D) sind,
gegenseitiges Bewegen der ersten (5) und zweiten passenden Mittel (6), bis diese in einem gegenseitig zueinander passenden Zustand (C) sind, um die Längsumschlagklappen (7, 8) zu falten und zu verbinden,
fast gleichzeitig mit dem Falten der Umschlagklappen Ausführen mindestens eines Schnitts zum Erleichtern des Öffnens in einer oder beiden Längsumschlagklappen (7, 8) mittels eines Schneidmittels (9), das von dem ersten passenden Mittel (5) mindestens in dem gegenseitig zueinander passenden Zustand (C) vorsteht.

22. Verfahren gemäß Anspruch 21, **dadurch gekennzeichnet, dass** es das Ausführen eines linearen oder eines "V"-förmigen Schnitts mittels des Schneidmittels umfasst, das entsprechend geformt ist.

23. Verfahren gemäß Anspruch 21, **dadurch gekennzeichnet, dass** es das Befestigen der Querumschlagklappen (19, 20) des Materials (4) mittels Verschlussmitteln (18) umfasst, die diese perfekt abdichten, nachdem der Schnitt ausgeführt wurde.

24. Verfahren gemäß Anspruch 23, **dadurch gekennzeichnet, dass** es das Drehen der Querumschlagklappen (19, 20) mittels der Drehzangenmittel (25, 26) umfasst, um eine Verpackungsverdrehung nach dem Befestigen der Querumschlagklappen auszuführen.

## Revendications

1. Dispositif pour emballer un article, comprenant un moyen de fixation (2) pour l'article (3) en partie enroulé dans un matériau en feuille d'emballage (4) et au moins deux moyens d'adaptation, un premier (5) et un second (6), se déplaçant l'un par rapport à l'autre entre un état à distance mutuelle maximale (D), pour intercaler entre eux les volets longitudinaux (7, 8) dudit matériau (4) faisant saillie de l'article (3), et un état d'adaptation mutuel (C) pour replier et réunir lesdits volets longitudinaux (7, 8), dans lequel le dispositif comprend en outre au moins un moyen de coupe (9) pour ménager, dans l'un et/ou l'autre des volets longitudinaux (7, 8) de la feuille d'emballage, une coupe ajustée pour faciliter l'ouverture de l'emballage par un utilisateur, ledit dispositif étant **caractérisé en ce que** le moyen de coupe (9) fait saillie, au moins dans l'état d'adaptation mutuel (C), du premier moyen d'adaptation (5) dans le sens du second moyen d'adaptation (6).

2. Dispositif selon la revendication 1, **caractérisé en ce qu'**il comprend des moyens de guidage (10) permettant au moyen de coupe (9) de glisser entre un état saillant (P), dans lequel il fait saillie du premier moyen d'adaptation (5), et un état interne (I), dans lequel le moyen de coupe est logé dans un évidement (11) du premier moyen d'adaptation (5), et **en ce qu'**il comprend un premier moyen élastique (15) agissant sur le moyen de coupe (9) avec une force élastique dans la direction du second moyen d'adaptation.

3. Dispositif selon la revendication 1, **caractérisé en ce qu'**il comprend un moyen de battement mobile (12) fixé au premier moyen d'adaptation (5) de manière coulissante vers le second moyen d'adaptation (6) entre un état déployé (E), dans lequel il contient complètement le moyen de coupe (9), et un état de rentrée (R), dans lequel le moyen de coupe (9) sort du moyen de battement mobile (12) à travers une ouverture (13) de celui-ci, et **en ce qu'**il comprend un second moyen élastique (14) agissant sur le moyen de battement mobile (12) avec une force élastique dans la direction du second moyen d'adaptation.

4. Dispositif selon la revendication 3, **caractérisé en ce que** le moyen de coupe (9) est fixé de manière rigide au premier moyen d'adaptation 5.

5. Dispositif selon les revendications 2 et 3, **caractérisé en ce que** le premier moyen élastique (15) exerce une force supérieure à celle du second moyen élastique (14).

6. Dispositif selon la revendication 1, **caractérisé en ce que** le second moyen d'adaptation (6) a un évidement (16) ajusté pour loger une partie du moyen de coupe (9) au moins dans l'état d'adaptation mutuel (C) entre les moyens d'adaptation (5, 6).

7. Dispositif selon la revendication 1, **caractérisé en ce que**, lorsque le matériau en feuille d'emballage (4) a des volets longitudinaux (7, 8) munis d'adhésif, les moyens d'adaptation sont du type à collage à froid.

8. Dispositif selon la revendication 1, **caractérisé en ce que**, lorsque le matériau en feuille d'emballage (4) est du type à thermosoudage, les moyens d'adaptation sont du type à soudage à chaud.

9. Dispositif selon la revendication 1, **caractérisé en ce qu'**il est du type à mouvement rotatif.

10. Dispositif selon la revendication 9, **caractérisé en ce que** le second moyen d'adaptation (6) est fixé et comprend un moyen de flexion en forme de segment annulaire (17).

11. Dispositif selon la revendication 10, **caractérisé en ce que** le moyen de flexion (17) s'étend dans le sens du mouvement de rotation au moins jusqu'à un moyen de fermeture (18) pour les volets transversaux (19, 20) du matériau (4), faisant saillie de l'article (3).

12. Dispositif selon la revendication 11, **caractérisé en ce que** le moyen de fermeture (18) comprend deux pinces (21, 22) pour la fermeture des volets transversaux (19, 20) du matériau (4) faisant saillie de l'article (3), chacune des pinces étant munie de deux mâchoires (23, 24).

13. Dispositif selon la revendication 12, **caractérisé en ce que** les mâchoires (23, 24) de chaque pince (21, 22) sont disposées dans un plan presque parallèle à celui défini par le mouvement rotatif et elles sont presque tangentes à des circonférences centrées sur l'axe de rotation du mouvement, ou disposées sur celles-ci.

14. Dispositif selon la revendication 12, **caractérisé en ce que**, lorsque le matériau en feuille d'emballage (4) est muni de volets transversaux adhésifs (19, 20), les mâchoires (23, 24) des pinces (21, 22) sont du type à collage à froid.

15. Dispositif selon la revendication 12, **caractérisé en ce que**, lorsque le matériau en feuille d'emballage (4) est du type à thermosoudage, les mâchoires (23, 24) des pinces (21, 22) sont du type à soudage à chaud.

16. Dispositif selon la revendication 1, **caractérisé en ce qu'**il comprend deux moyens à tenailles rotatifs (25, 26) pour fixer les volets transversaux (19, 20) du matériau (4) et pour faire tourner lesdits volets afin d'effectuer la torsade d'un emballage de bonbon.

17. Dispositif selon les revendications 11 et 16,
**caractérisé en ce que** les moyens à tenailles rotatifs (25, 26) sont positionnés en aval du moyen de fermeture (18) par rapport au sens du mouvement de rotation.

18. Dispositif selon la revendication 17, **caractérisé en ce que** les moyens d'adaptation (5, 6) sont séparés angulairement du moyen de fermeture (18) d'un angle d'environ 90 ° et ce dernier est espacé angulairement des moyens à tenailles rotatifs (25, 26) d'un angle d'environ 90 °.

19. Dispositif selon la revendication 16, **caractérisé en ce que** les moyens à tenailles rotatifs (25, 26) sont presque perpendiculaires au plan défini par le mouvement de rotation.

20. Dispositif selon la revendication 1, **caractérisé en ce que** l'article (3) est constitué d'un chocolat, d'un bonbon, d'une friandise, d'une praline ou analogue.

21. Procédé pour emballer un article à l'aide du dispositif selon l'une quelconque des revendications précédentes, **caractérisé en ce qu'**il consiste à :
- saisir à l'aide d'un moyen de fixation (2) l'article (3) en partie enroulé dans un matériau en feuille d'emballage (4) avec les deux volets longitudinaux (7, 8) faisant saillie de l'article (3) ;
- intercaler les deux volets longitudinaux saillants (7, 8) entre deux moyens d'adaptation, un premier 5 et un second 6, se déplaçant l'un par rapport à l'autre et dans un état de distance mutuelle maximale D ;
- déplacer mutuellement les deux moyens d'adaptation, le premier (5) et le second (6), jusqu'à ce qu'ils se trouvent dans un état d'adaptation mutuel (C) pour replier et réunir lesdits volets longitudinaux (7, 8) ; et
- effectuer, presque en même temps que le pliage des volets, au moins une coupe pour faciliter l'ouverture dans l'un et/ou l'autre des deux volets longitudinaux (7, 8), à l'aide d'un moyen de coupe (9) faisant saillie du premier moyen d'adaptation (5) au moins dans l'état d'adaptation mutuel (C).

22. Procédé selon la revendication 21, **caractérisé en ce qu'**il comprend l'exécution d'une coupe linéaire ou en forme de "V" à l'aide du moyen de coupe façonné de manière correspondante.

23. Procédé selon la revendication 21, **caractérisé en ce qu'**il comprend la fixation des volets transversaux (19, 20) du matériau (4) à l'aide de moyens de fermeture (18), en les fermant de manière parfaitement hermétique, après réalisation de la coupe.

24. Procédé selon la revendication 23, **caractérisé en ce qu'**il comprend la rotation des volets transversaux (19, 20) à l'aide des moyens à tenailles rotatifs (25, 26) pour effectuer la torsade d'un emballage après fixation des volets transversaux.
